# EUROPEAN PATENT SPECIFICATION

(11) **EP 3 220 344 B1**
(45) Date of publication and mention of the grant of the patent: **06.09.2023**
(21) Application number: 17000438.6
(22) Date of filing: 17.03.2017
(51) Int. Cl.: G06F 16/21, G06Q 10/10, G06Q 50/14

(54) **DATA PROCESSING SYSTEM MIGRATION USING SELECTIVE MANAGEMENT OF ENVELOPES CAPTURING IMAGES OF DOCUMENTS**
MIGRATION EINES DATENVERARBEITUNGSSYSTEMS MITTELS SELEKTIVER VERWALTUNG VON ENVELOPPEN, DIE ABBILDUNGEN VON DOKUMENTEN FESTHALTEN
MIGRATION D'UN SYSTEME DE TRAITEMENT DE DONNEES EN UTILISANT LA GESTION SELECTIVE D'ENVELOPPES CAPTURANT DES IMAGES DE DOCUMENTS

(30) Priority: 17.03.2016 FR 1652250; 17.03.2016 US 201615072474
(43) Date of publication of application: 20.09.2017
(73) Proprietor: Amadeus S.A.S., 06410 Biot (FR)
(72) Inventor: Angelini, Christophe, 06130 Grasse (FR); Arnaud, Romain, Waltham, Massachusetts 02451 (US); Davini, Gabriele, 560 066 Bangalore (IN); Mantelet, Pascale, 06600 Antibes (FR); Perreaut, Marc, 06270 Villeneuve-Loubet (FR)
(74) Representative: Samson & Partner Patentanwälte mbB

(56) References cited:
- EP-A2- 2 827 286
- US-A1- 2015 058 289
- ANONYMOUS: "Replicating and Restoring Microsoft SQL Databases with VERITAS Storage Replicator 2.1", VERITAS WHITE PAPER, XX, XX, 4 March 2002 (2002-03-04), pages 1-27, XP002290508,

## Description

### BACKGROUND

The invention generally relates to computers and computer software, and in particular to methods, systems, and computer program products for migrating system operations from one software platform to another.

Data processing systems typically comprise a computer running one or more software applications that exchange data files with other data processing systems. To provide their intended functions, the software applications often store and retrieve data files from one or more databases. The software applications may rely on these data files to properly process queries received from the other data processing systems. Databases may thereby provide a type of searchable memory that allows the data processing system to process requests and generate responses based on the results of previous data processing.

Over time, software applications, as well as the computers that host them, may become outdated and need replacement. Because outdated software often still provides critical functions to the system users, any significant disruptions in the operation of existing applications can be costly to the system user. Thus, migrating operation of a data processing system from an existing software platform to a new software platform carries a certain amount of risk to the system user if the migration does not go smoothly.

While system migration may be inevitable for most systems, system migration may present particular risks for revenue accounting systems due to the need ensure continuity of financial processing during and after migration. Operational continuity during system migration may impact, for example, handling of financial accounts, dispute management, partnerships management, and outbound data feeds. System migration may require validation of data processing, internally generated data files, and migrated data files in the new system. In conventional systems, how successfully legacy data files and processes have been migrated to the replacement platform may not be fully known until after cutover, when reports of completeness and accuracy become available. To resolve issues caused by the migration, validation of new system processes using follow-up audits that compare migrated and legacy data may be necessary for a significant period of time after cutover. These shortcomings of existing methods of migrating data processing systems may increase the risk of incurring system downtime and incorrect processing of data files.

The VERITAS white paper titled "Replicating and Restoring Microsoft SQL Databases with VERITAS Storage Replicator 2.1", pages 1-27 gives an example data migrating from a source database to a target database. Replication is effectuated in two phases, a synchronization phase and a dynamic phase. The dynamic phase tracks changes as they occur on the source system during the synchronization phase. Files on the target system are updated in the same order after the synchronization phase. Improved systems, methods, and computer program products for migrating data processing systems from one software platform to another are needed that reduce the risks associated with system migration.

### SUMMARY

The invention is defined by the features of the independent claims. Preferred embodiments are defined by the features of the dependent claims. In an embodiment of the invention, a data processing system including a legacy platform and a replacement platform is provided according to claim 9. The system comprises one or more processors, and a memory coupled to the processors. The memory stores program code that, when executed by at least one of the processors, causes the system to receive, from an external source and through a legacy input data feed and a replacement input data feed, input data at each of the legacy platform and the replacement platform, the input data relating to a first document in a legacy database. The program code further causes the system to update the first document in the legacy database based on the input data, generate a second document in a replacement database based on the input data, and capture an image of the second document in a first envelope in the replacement database, the first envelope maintaining a history of the second document by adding an image of the second document to the first envelope when the second document is modified. The program code further causes the system to migrate the first document from the legacy database to the replacement database; to capture a second image of the first document in a second envelope in the replacement database, the second image in the second envelope conserving the migrated first document at a specific point in time, the second envelope representing the first document migrated from the legacy database; to compare the first image in the first envelope to the second image in the second envelope; and in response to the second image matching the first image, to validate the second document in the replacement database.

In another embodiment of the invention, a method of migrating the data processing system from the legacy platform to the replacement platform is provided according to claim 1. The method includes receiving the input data, updating the first document in the legacy database based on the input data, generating the second document in the replacement database based on the input data, and capturing the image of the second document in the first envelope in the replacement database.

In another embodiment of the invention, a computer program product is provided that includes a non-transitory computer-readable storage medium including program code according to claim 11. The program code is configured, when executed by the one or more processors, to cause the processors to receive the input data, update the first document in the legacy database based on the input data, generate the second document in the replacement database based on the input data, and capture the image of the second document in an envelope in the replacement database.

### BRIEF DESCRIPTION OF THE DRAWINGS

The accompanying drawings illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of data processing systems in communication via a network.
FIG. 2 is a diagrammatic view of an exemplary data processing system of FIG. 1.
FIG. 3 is a diagrammatic view of a block diagram depicting a legacy platform and a replacement platform that may be hosted by one or more of the data processing systems in FIG. 1.
FIG. 4 is a diagrammatic view of a block diagram depicting a logical relationship between a document and a plurality of envelopes that may be stored in a database of the replacement platform of FIG. 3.
FIG. 5 is a diagrammatic view depicting an exemplary structure for the document of FIG. 4.
FIG. 6 is a diagrammatic view depicting hierarchal tree structures for the document of FIG. 5 for each of a legacy database and a replacement database.
FIG. 7 is a diagrammatic view depicting a discrepancy table that may be stored in a validation database.
FIG. 8 is a diagrammatic view of a user interface that may be used to display data stored in the discrepancy table of FIG. 7.
FIG. 9 is a diagrammatic view of process flow for migrating a data processing system from the legacy platform to the replacement platform of FIG. 3.

### DETAILED DESCRIPTION

Embodiments of the invention may be implemented by a data processing system, such as a Global Distribution System (GDS). The data processing system may provide processing and database functions that facilitate interconnections between one or more third party seller systems, carrier systems, billing and settlement plan systems, revenue accounting systems, or any other data processing systems associated with providing travel products. In the context of air travel, the data processing system may allow travelers to book airline tickets and other travel products through indirect sales channels. These indirect sales channels may include online travel agencies or other business entities selling tickets for services to be provided by a different business entity (e.g., a carrier). The indirect sellers may receive payment from the travelers for the booked tickets and compensate the carrier for the cost of the service provided out of the received payment or, alternatively, by having the travelers make a direct payment to the carrier.

Embodiments of invention may include a migration manager that enables a phased data migration strategy for migrating data processing systems from a legacy platform including a legacy application and a legacy database to a replacement platform including a legacy application and a legacy database. The migration manager may provide adaptive storage, manipulation, and reporting of multiple envelopes for each document being migrated from the legacy platform to the replacement platform. The migration manager may receive data extracted by the legacy application from documents in the legacy database while the legacy platform is operating with live system data. The migration manager may use this data to create a migrated envelope in the replacement database. At the same time, the replacement application may separately generate native envelopes in the replacement database by operating with the live system data in a shadow mode. The migrated envelope may fall between corresponding native envelopes, and the migration manager may use the native envelopes to perform comparisons, generate reports, cleanse migrated documents, or merge migrated and native documents. During this period of parallel, or "dual-run" operation, the migration manager may perform an automated data comparison to detect differences between data in the legacy database and replacement database based on multiple envelopes to evaluate data mapping and aggregation.

The migration manager may enable a phased and flexible data migration strategy by selective envelope management in the replacement platform. Dual-run operation of the legacy and replacement platforms, and selective envelope management in the replacement platform may enable on-the-fly data cleansing and validation, as well as post-migration reporting during the migration period. Follow up migration process evaluation may include generation of outward data feeds based on user selected data in the replacement system (e.g., migrated envelopes, or last available native envelopes), allowing for process validation or automatic population of test environments.

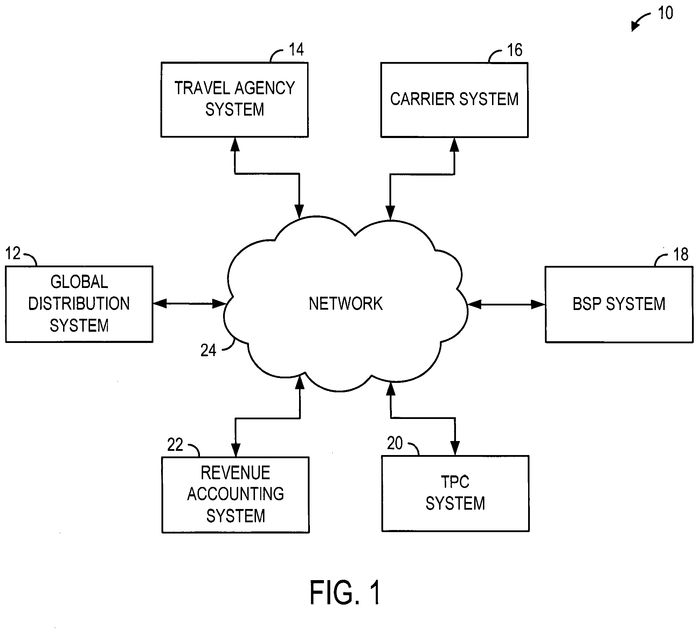

Referring now to FIG. 1, an exemplary operating environment 10 in accordance with an embodiment of the invention may include a Global Distribution System (GDS) 12, one or more indirect seller systems, such as travel agency system 14, one or more travel product provider systems, such as carrier system 16, a Billing and Settlement Plan (BSP) system 18, a Tariff Publishing Company (TPC) system 20, and a revenue accounting system 22. Each of the GDS 12, travel agency system 14, carrier system 16, BSP system 18, TPC system 20, and revenue accounting system 22 may communicate through a network 24. The network 24 may include one or more private and/or public networks (e.g., the Internet) that enable the exchange of data.

The GDS 12 may be configured to facilitate communication between the carrier system 16 and travel agency system 14 by enabling travel agents, validating carriers, or other indirect sellers to book reservations on one or more carrier systems 16 via the GDS 12. To this end, the GDS 12 may maintain links to each carrier system 16 via the network 24. These links may allow the GDS 12 to route reservation requests from the travel agency system 14 and/or carrier system 16 of the validating carrier to a corresponding carrier system 16 for the operating carrier. The travel agency system 14 and carrier system 16 may thereby book flights on multiple airlines via a single connection to the GDS 12. The GDS 12 may store copies of Passenger Name Records (PNRs) generated by the carrier system 16, as well as data that defines pricing context parameters and ticket prices associated with booked reservations in one or more searchable databases. This data may allow a PNR to be maintained by the GDS 12 that includes a complete set of flight data for an itinerary including air segments from multiple airlines.

The carrier system 16 may include a Computer Reservation System (CRS) and/or billing system for the respective airline that enables the GDS 12 and/or travel agency system 14 to reserve and pay for airline tickets. The carrier system 16 may also interact with other carrier systems 16, either directly or through the GDS 12, to enable a validating carrier to sell tickets for seats provided by the operating carrier. The operating carrier may then bill the validating carrier for the services provided. Billing between business entities acting as indirect sellers and business entities acting as travel service providers may be provided by the BSP system 18.

The BSP system 18 may be configured to receive data from the ticketing office of the travel agency or validating carrier reporting the sale of the ticket in the name of the operating carrier. In the United States, the Airline Reporting Corporation (ARC) normally provides this service. In any case, the BSP may act as a Business Process Outsourcer (BPO) that provides a clearing house for settling accounts between travel agencies, validating carriers, operating carriers, and any other business entity involved in the transaction. The operating carrier may thereby collect a fare via the BSP for providing the seat.

The TPC system 20 may be operated by a tariff publishing company, such as the Airline Tariff Publishing Company (ATPCO) or Société Internationale de Télécommunications Aéronautiques (SITA). The TPC system 20 may provide fare data for multiple carriers to the GDS 12, travel agency system 14, carrier system 16, BSP system 18, revenue accounting system 22, or any other system that requires fare data. The fare data may include rules that must be satisfied for the corresponding fare to apply, and may be updated regularly by the corresponding travel providers.

The revenue accounting system 22 may manage the control, use, and accounting of electronic tickets, Miscellaneous Charges Orders (MCOs), Electronic Miscellaneous Documents (EMDs), and other electronic documents related to the sale and use of travel products. The revenue accounting system 22 may validate transactions and correct billing errors, such as by recovering under-collections. The revenue accounting system 22 may also be configured to detect fraud and deliver passenger revenue and segment data to back office systems of the travel providers. Although shown as a separate system, the revenue accounting system 22 may also be provided by or included in one or more of the GDS 12, travel agency system 14, carrier system 16, BSP system 18, or TPC system 20.

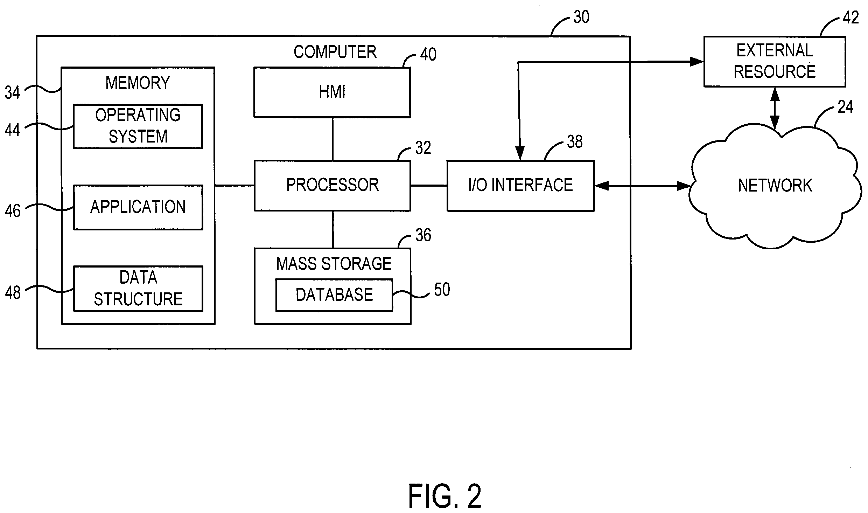

Referring now to FIG. 2, the GDS 12, travel agency system 14, carrier system 16, BSP system 18, TPC system 20, and revenue accounting system 22 of operating environment 10 may be implemented on one or more computer devices or systems, such as exemplary computer 30. The computer 30 may include a processor 32, a memory 34, a mass storage memory device 36, an input/output (I/O) interface 38, and a Human Machine Interface (HMI) 40. The computer 30 may also be operatively coupled to one or more external resources 42 via the network 24 or I/O interface 38. External resources may include, but are not limited to, servers, databases, mass storage devices, peripheral devices, cloud-based network services, or any other suitable computer resource that may be used by the computer 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 44 that resides in memory 34. The operating system 44 may manage computer resources so that computer program code embodied as one or more computer software applications, such as an application 46 residing in memory 34, may have instructions executed by the processor 32. In an alternative embodiment, the processor 32 may execute the application 46 directly, in which case the operating system 44 may be omitted. One or more data structures 48 may also reside in memory 34, and may be used by the processor 32, operating system 44, or application 46 to store or manipulate data.

The I/O interface 38 may provide a machine interface that operatively couples the processor 32 to other devices and systems, such as the network 24 or external resource 42. The application 46 may thereby work cooperatively with the network 24 or external resource 42 by communicating via the I/O interface 38 to provide the various features, functions, applications, processes, or modules comprising embodiments of the invention. The application 46 may also have program code that is executed by one or more external resources 42, or otherwise rely on functions or signals provided by other system or network components external to the computer 30. Indeed, given the nearly endless hardware and software configurations possible, persons having ordinary skill in the art will understand that embodiments of the invention may include applications that are located externally to the computer 30, distributed among multiple computers or other external resources 42, or provided by computing resources (hardware and software) that are provided as a service over the network 24, such as a cloud computing service.

The HMI 40 may be operatively coupled to the processor 32 of computer 30 in a known manner to allow a user to interact directly with the computer 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 50 may reside on the mass storage memory device 36, and may be used to collect and organize data used by the various systems and modules described herein. The database 50 may include data and supporting data structures that store and organize the data. In particular, the database 50 may be arranged with any database organization or structure including, but not limited to, a relational database, a hierarchical database, a network database, an object-oriented database, or combinations thereof.

A database management system in the form of a computer software application executing as instructions on the processor 32 may be used to access the information or data stored in records of the database 50 in response to a query. The query may be dynamically determined and executed by the operating system 44, other applications 46, one or more modules, or any suitable system element. Although embodiments of the invention may be described herein using relational, hierarchical, network, object-oriented, or other database terminology in specific instances, embodiments of the invention may use any suitable database management model, and are not limited to any particular type of database.

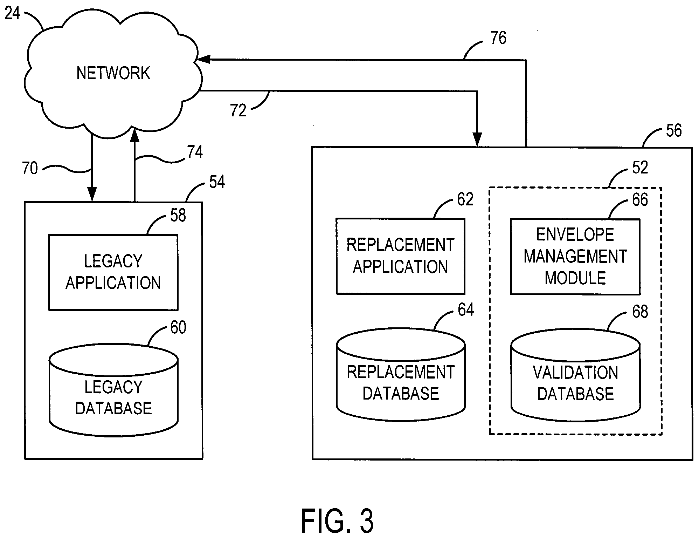

Referring now to FIG. 3, a migration manager 52 may facilitate migration of a system from a legacy platform 54 to a replacement platform 56. To this end, the migration manager 52 may manage communications and the transfer of data between the network 24 and the replacement platform 56. The legacy platform 54 may include a legacy application 58 and a legacy database 60 comprising a legacy system that is being replaced or upgraded. The replacement platform 56 may include a replacement application 62 and a replacement database 64 that comprise a replacement system which is replacing or providing an upgrade to the legacy system. The migration manager 52, legacy platform 54, and replacement platform 56 may reside within the a single system, or may reside on two or more physically or logically separate systems.

The migration manager 52 may include an envelope management module 66 that analyzes envelopes in the replacement database 64, and a validation database 68 that stores detected differences between native and migrated envelopes in the replacement databases 64. Although the legacy platform 54 and replacement platform 56 are described below in the context of migrating the revenue accounting system 22, embodiments of the invention are not so limited. Thus, the legacy platform 54 and replacement platform 56 could represent platforms for any data processing system being migrated, and embodiments of the invention are not limited to migration of any specific type of data processing system.

In the context of migrating the revenue accounting system 22 from the legacy platform 54 to the replacement platform 56, the legacy platform 54 receives input data through a legacy input data feed 70, and the replacement platform 56 receives the same input data through a replacement input data feed 72. The received data may include messages or files transmitted from one or more of the GDS 12, travel agency system 14, carrier system 16, BSP system 18, TPC system 20, or any other system in communication with the legacy platform 54 or replacement platform 56 via the network 24. The received data may comprise operational data, such as interline invoices, Hand-Off Tape (HOT) files used to report IATA BSP agency-to-airline and airline-to-agency transactions, Carrier Accounting Tape (CAT) files used to report ARC agency-to-airline and airline-to-agency transactions, Transaction Control Number (TCN) files, Industry Sales Record (ISR) files, and fare data.

Each of the legacy and replacement platforms 54, 56 may process the received data using the legacy or replacement application 58, 62, respectively, and update records in the corresponding legacy or replacement databases 60, 64. The legacy platform 54 may output data via the legacy output data feed 74, and the replacement platform 56 may output data via the replacement output data feed 76. This output data may be in the form of responses to the received messages or files.

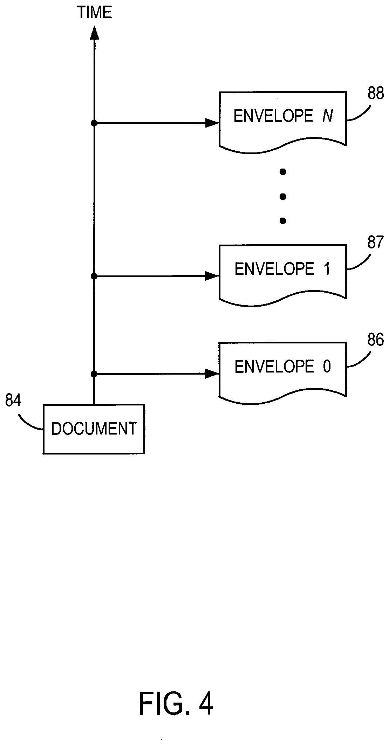

Referring now to FIG. 4, a document 84 is illustrated in relation to a plurality of envelopes 86-88. Documents may be stored in the legacy database 60 and replacement database 64, and may represent the most elementary type of data that is migrated from the legacy database 60 to the replacement database 64. Each document may include one or more coupons and a unique identifier that enables the document to be uniquely identified. Documents may comprise data files that can be migrated from the legacy database 60 to the replacement database 64 independently, although one document may refer to another document.

The replacement database 64 tracks documents using envelopes 86-88. Each envelope 86-88 comprises an image of the document 84 generated at a specific point in time. The history of a document 84 is maintained by generating a new envelope, or adding an image to an existing envelope, each time the document 84 is modified. The most recently generated envelope (e.g., envelope 88) may comprise the most recent image of the document, and thus may contain the most up-to-date data. In contrast, the initial envelope generated (e.g., envelope 86) may comprise the earliest available image of the document (e.g., the image of the document at the time the document was first generated or migrated), and thus may contain the least recent data available for that document.

The envelope management module 66 may be configured to compare native envelopes to migrated envelopes of a document in the replacement database 64. Envelope management may include selection of envelopes for processing of received data, and comparison of envelopes for system validation. A given envelope may represent data migrated from the legacy database 60 (i.e., a migrated envelope), data generated natively by the replacement application 62 (i.e., a native envelope), or a combination of migrated and natively generated data (i.e., a merged envelope). By making current and historical differences between migrated, merged, and native envelopes in the replacement database 64 readily visible, the envelope management module 66 may facilitate decisions relating to migration from the legacy platform 54 to the replacement platform 56. For example, the envelope management module 66 may provide audit trail comparisons between migrated documents, native documents, and documents comprising merged data in the replacement database 64.

The envelope management module 66 may provide flexible master data management by selectively mapping data from selected envelopes in the replacement database 64 to a single operation document that is transmitted via the replacement output data feed 76. The envelope management module 66 may provide data mastership via a historical migration mode that migrates data from the legacy database 60 to generate envelopes tagged as historical envelopes, but tags the most recent envelope generated by the replacement application 62 as the master envelope.

The envelope management module 66 may also cleanse documents in the replacement database 64. Cleansing documents may comprise detecting and correcting corrupt or inaccurate data elements in the documents. To this end, the envelope management module 66 may identify incorrectly valued or missing data elements in documents in the legacy database 60 while migrating the documents to the replacement database 64. The identification of corrupted or inaccurate data elements may be based on comparisons with corresponding envelopes in the legacy database 60. The envelope management module 66 may then replace or modify the corrupted data element by merging values from selected envelopes. The envelope management module 66 may also provide reporting and comparison by tagging and selection of specific envelopes for reports and re-transmission.

The data files managed by the system being migrated (e.g., the revenue accounting system 22) may comprise documents (e.g., electronic tickets), with each document comprising one or more coupons each representing a segment of an itinerary defined by the document. In particular, the revenue accounting system 22 may support live data acquisition and updates of the documents and coupons from different sources, e.g., an e-ticket server, an electronic miscellaneous document server, a Departure Control System, etc. Each new event that results in a change to a document may trigger creation and storage of a specific envelope that contains original data plus data updated by the event. Thus, the most recent envelope of a given document may represent the latest image of the document.

Envelopes may be tagged as being of a specific type, e.g., master, slave, historical, migrated raw data, migrated merged data, or any other suitable type defined within the replacement platform 56. As a default, the envelope management module 66 may be configured to access the most recent envelope for any received process call that uses or updates a document or coupon without regard to any tags that may be present. However, tags may provide a mechanism that enables a specific envelope to be accessed by the envelope management module 66 based on a tag. For example, the envelope management module 66 may be configured to access an envelope that is tagged as a master envelope even if there is a more recent envelope for the document in question. The envelope management module 66 may also use envelopes to provide a document audit trail.

The legacy database 60 and replacement database 64 may have different document structures, which may inhibit validating reference data using direct comparisons between documents in the legacy database 60 (i.e., legacy documents) and documents in the replacement database 64 (i.e., replacement documents). For example, each database may use a different business object model, a different data storage structure, a different data export layout (e.g., comma separated values vs. fixed length), and/or a different order for transactions and repetitive elements (e.g., coupons, taxes, forms of payment). The legacy and replacement documents may also exhibit differences in data caused by rounding issues or reporting formats.

To address validation difficulties caused by differences in database structure, the migration manager 52 may be configured to parse documents into a number of "extract files" each containing a specified type of data. Extract files from corresponding documents from the legacy database 60 and replacement database 64 may be compared in a generally direct manner. In an embodiment of the invention, each document may be split into three different extract files, one each for documents, coupons, and taxes-fees-charges (TFCs).

The migration manager 52 may begin the process of parsing a legacy document exported from the legacy database 60 by identifying comparable elements within the document. The migration manager 52 may then describe the content of the legacy document using a predefined syntax to identify a grammatical structure of the document. The migration manager 52 may then perform functional mapping between the elements identified in the legacy document and matching fields of the replacement document in the replacement database 64 based on corresponding elements in the predefined syntax. The migration manager 52 may then populate the fields of the replacement document with data exported from the legacy document based on the mapping.

In an embodiment of the invention, parsing based on grammar may be performed by the migration manager 52 as the reference data is extracted from the legacy database 60 and used to populate documents in the replacement database 64. Run-time parsing by the migration manager 52 may enable the legacy platform 54 and replacement platform 56 to operate in parallel without changes to the software to accommodate differences in document formatting. Run-time parsing may also allow the same functional data in an outbound feed to be compared under two different document formats, e.g., standard Interline Data Exchange Centre (IDEC) and Integrated Settlement IDEC (IS-IDEC), IDEC and IS-XML, etc.

Document parsing based on grammar may enable the migration manager 52 to ignore specific fields within a document, or differences in the values of particular fields that are less than a predetermined threshold, e.g., less than a fixed amount or a percentage of the value of the elements being compared. In any case, the migration manager 52 may perform post-process filtering to remove known differences between the legacy document and the replacement document. Discrepancies between mapped elements may be stored in the validation database 68 to facilitate calculation of user defined key performance indicators, which may focus on specific comparison runs or fields.

Generating extract files in each of the legacy database 60 and replacement database 64 may enable validation of raw database data before corresponding documents are processed by the legacy application 58 or replacement application 62. The extract files may also provide flexibility by allowing data validation independent of platform data formats and database structures. The extract files may also improve tracking through use of key performance indicators that allow users to define objective cutover criteria based on replacement platform data quality.

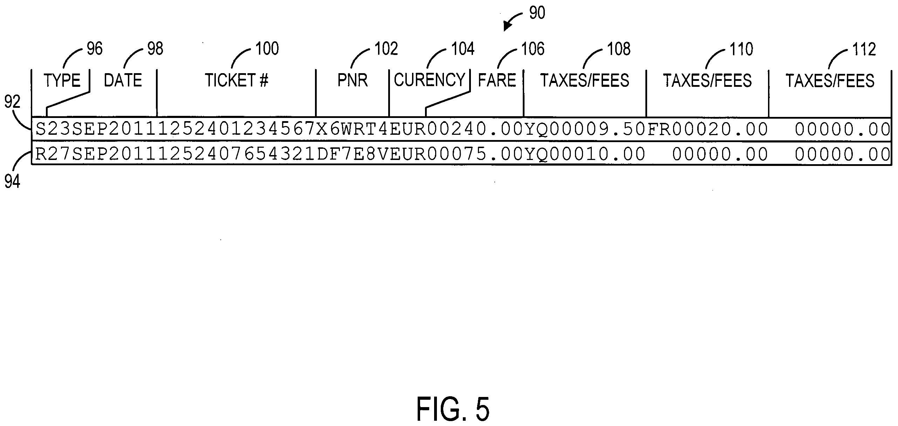

Referring now to FIG. 5, an exemplary document 90 comprising two coupons 92, 94 is depicted as a grammar file. The grammar file may comprise a plurality of data fields each containing a data element. In the exemplary embodiment shown, each coupon 92, 94 comprises a one character type element 96, a nine character date element 98, a 13 character ticket number element 100, a six character PNR element 102, a three character currency element 104, an eight character fare amount element 106, and three tax group elements 108, 110, 112 each comprising a two character code (e.g., YQ, FR, <null>) and an eight character amount (e.g., 00000.00, 00009.50, 00010.00, 00020.00).

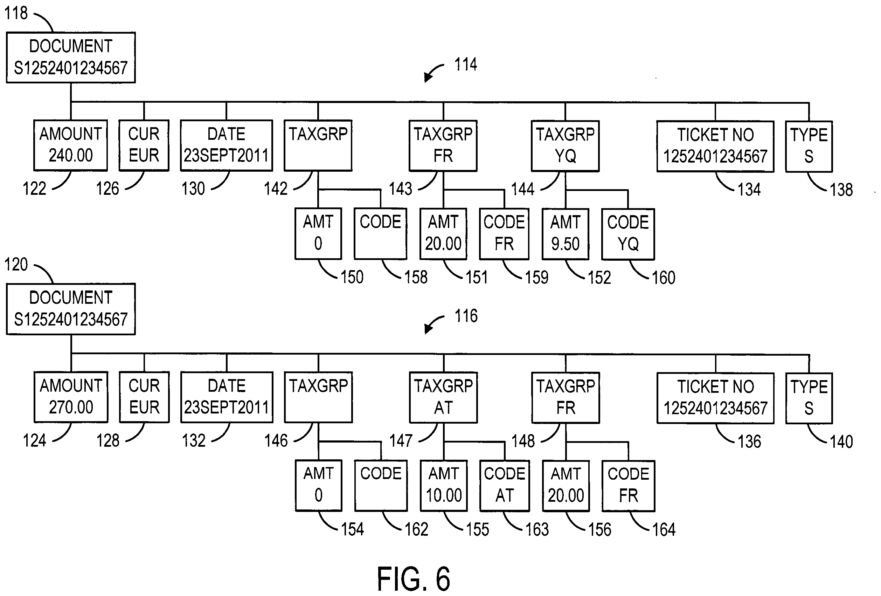

Referring now to FIG. 6, the coupon 92 is depicted by two hierarchical tree structures 114, 116, which may represent the coupon 92 as stored in the legacy and replacement databases 60, 64, respectively. Each tree structure 114, 116 may comprise a plurality of linked nodes that map to elements in the corresponding grammar file of coupon 92. The exemplary tree structures 114, 116 each include a document node 118, 120, an amount node 122, 124, a currency node 126, 128, a date node 130, 132, a ticket number node 134, 136, a document type node 138, 140, and three tax group nodes 142-144, 146-148, each of which is the parent of a respective amount node 150-152, 154-156 and code node 158-160, 162-164.

The document node 118, 120 may contain data identifying the coupon 92, the amount node 122, 124 may contain data defining the amount of the fare, the currency node 126, 128 may contain data identifying the currency in which the amounts are denominated, the date node 130, 132 may contain data defining a date relevant to the coupon 92 (e.g., the date of the flight), the tax group amount nodes 142-144, 146-148 may contain data defining an amount of a tax or fee, and code nodes 150-152, 154-156 may contain data defining a code that identifies the type of tax or fee. Mapping the data elements comprising the coupon 92 into a hierarchal tree structure may unify the representation of the underlying data, thereby facilitating comparisons between a document having different grammar formats in the legacy database 60 and replacement database 64.

The nodes of the tree structures 114, 116 may be sorted to solve issues caused by random positioning of data elements in the grammar files stored in the legacy database 60 and the replacement database 64. Comparison of the tree structure 116 generated from the coupon 92 stored in the replacement database 64 with the tree structure 114 generated from the corresponding coupon 92 stored in the legacy database 60 may allow missing/additional nodes and incorrect values to be quickly identified.

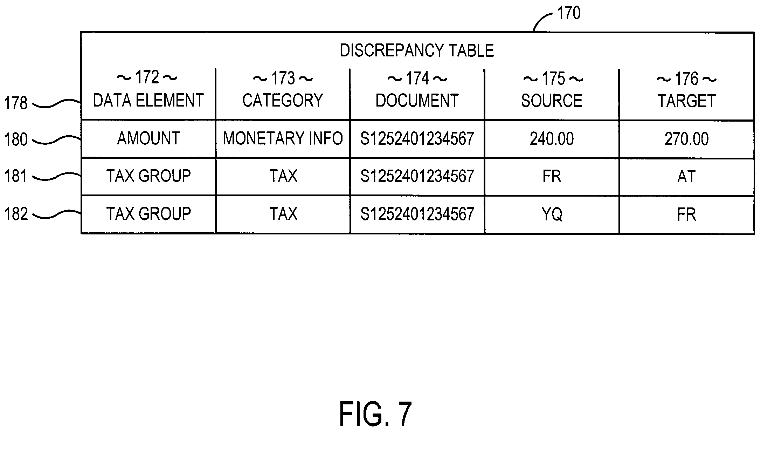

The migration manager 52 may store results of comparisons between documents in the validation database 68. For example, in the case of the exemplary tree structures 114, 116 depicted in FIG. 6, the validation database 68 may store a discrepancy table 170 as illustrated in FIG. 7. The discrepancy table 170 may include plurality of columns 172-176, a header row 178, and one or more data rows 180-182. The intersection of each column 172-176 and row 180-182 may define a data field that contains information relating to a discrepancy detected between a legacy document and a replacement document. The header row 178 may include headers that identify the type of information located in each corresponding column of the data rows 180-182. For example, as depicted in FIG. 7, header row 178 includes headers for data element type, data element category, the identity of the document containing the data element in question, the data element value in the legacy document, and data element value in the replacement document.

In the exemplary case presented, three discrepancies have been detected between the coupon represented by the tree structures 114, 116. As depicted by row 180, the amount of the fare shown in node 122 of tree structure 114 differs from the amount of the fare shown in node 124 of tree structure 116. Rows 181 and 182 each depict a discrepancy in the code identifying the taxes charged for the coupon 92.

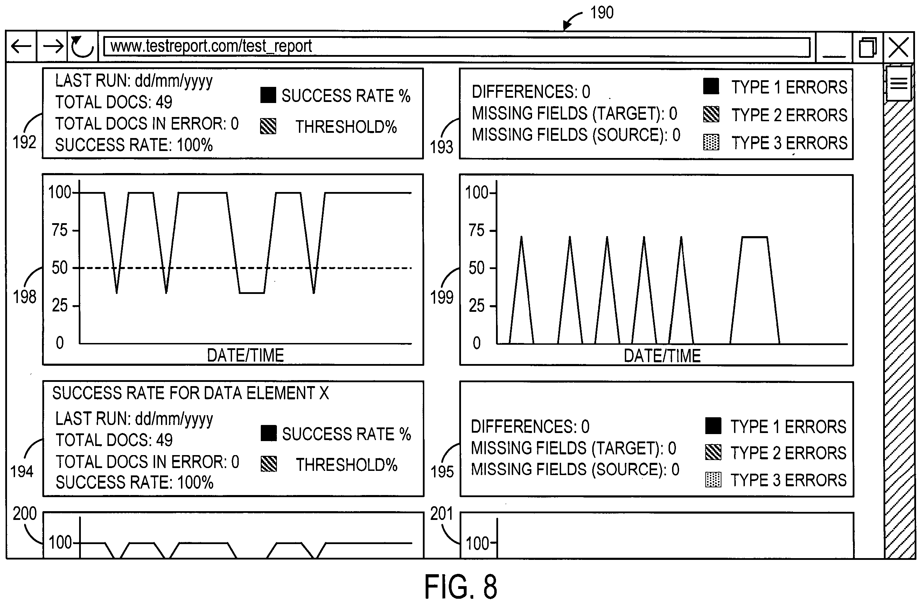

The data stored in discrepancy table 170 may be used to provide key performance indicators to system users involved with the migration from the legacy platform 54 to the replacement platform 56. These key performance indicators may be provided to the users through, for example, a web-page. Referring now to FIG. 8, an exemplary user interface 190 for displaying key performance indicators may include text fields 192-195 for displaying text-based information and graphs 198-201 for displaying graphical information, such as plots of the key performance indicators over a period of time. The user interface 190 may be provided by a web-page configured to enable users to drill-down by file format, obtain statistics on all or selected validation runs, browse errors of a specific run, drill down by data type, view statistics by category or data element, browse errors, and generate reports in various formats (such as the Portable Document Format (PDF)) using a key performance indicator dashboard.

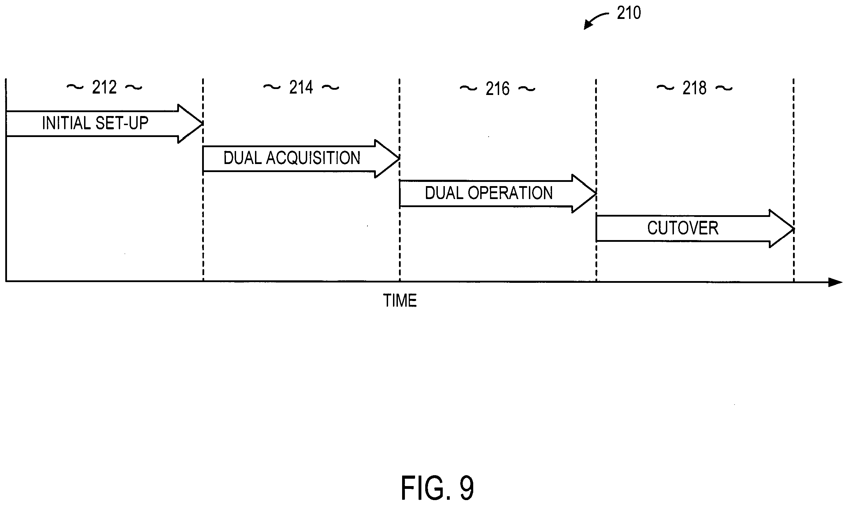

Referring now to FIG. 9, an exemplary migration 210 from the legacy platform 54 to the replacement platform 56 may be implemented in phases. The migration 210 may begin with an initial setup phase 212. The initial setup phase 212 may include linking the network 24 to each of the legacy and replacement data input feeds 70, 72, and loading reference data into the replacement platform 56. Reference data may include, for example, a carrier's private proration agreements.

In some cases, the legacy database 60 and one or more of the sources of data provided to the replacement input data feed 72 may reside in the same system as the replacement database 64. This may occur, for example, if a production accounting system of a carrier is hosted by the GDS 12, and is upgraded from the legacy platform 54 to the replacement platform 56. In this case, reference data for populating the replacement database 64 may be acquired from e-ticket and electronic miscellaneous document servers of the carrier if these servers are also hosted on GDS 12.

Conventional methods of migrating systems from a legacy platform to a replacement platform typically address issues involving reference data and data links at the end of the migration period. In contrast, embodiments of the present invention may address these issues at the beginning of the migration to allow for dual processing and validation of later occuring migration steps. This may enable validation of the acquisition process, reference data completeness, and accuracy of the replacement platform in phases using automated comparisons of documents. In particular, documents generated natively by the replacement platform 56 may be compared to corresponding documents generated by the legacy platform 54 during dual-run operation of the legacy and replacement platforms 54, 56.

Once the legacy and replacement platforms 54, 56 have been connected to the data feeds, and the replacement database 64 populated with reference data, the migration 210 may proceed to a dual acquisition phase 214. During the dual acquisition phase 214, input data is provided to both the legacy and replacement input data feeds 70, 72 so that the inbound data is jointly provided to the legacy platform 54 and replacement platform 56. The legacy platform 54 and replacement platform 56 may each process the inbound data, and update their corresponding legacy and replacement databases 60, 64.

The migration manager 52 may validate the documents generated by the replacement platform 56 by comparing them to the documents generated by the legacy platform 54. For example, the migration manager 52 may compare the values of the data elements of the documents as described above with respect to FIGS. 6 and 7. Based on specific data extracts provided by the legacy platform 54, documents may be segregated based on time of issue, e.g., the month in which the document was generated. To compare the issued documents, the migration manager 52 may apply the same parsing and mapping techniques described above to address differences between the business object models and data file formats of the legacy and replacement platforms 54, 56.

Specific data cleansing may be applied to corrupted documents in response to the legacy platform 54 being unable to provide mandatory data to the replacement platform 56. In this case, the migration manager 52 may either set missing data elements to default values, compute a new value based on other data fields, or merge data from a corresponding data field in the most recent envelope in the replacement database 64 for the document in question.

The type of envelope generated in the replacement database 64 from migrated documents may also depend on the type of migration. Envelopes may be tagged, for example, as master, slave, historical, migrated raw data, or migrated merged data envelope. If the most recent envelope for the document in the replacement database 64 is tagged as historical, the envelope management module 66 may identify the most recent envelope in the replacement database 64 having a timestamp that precedes the migrated envelope. The envelope management module 66 may then generate a copy of the identified envelope having a timestamp that makes the copied envelope the most recent envelope for the document. Reinserting a previously generated envelope having a timestamp earlier than a migrated envelope may be used in cases where migrated data should not be used as master data by follow up operational processes, but is maintained in the replacement database 64 for historical purposes.

During the dual operation phase 216, the legacy platform 54 and replacement platform 56 are operated in parallel while the migration manager 52 continues to validate data in the replacement database 64. This validation may include comparing documents in the replacement database 64 to documents in the legacy database 60 and to earlier versions of the documents in the replacement database 64 as captured by corresponding envelopes. In an alternative embodiment of the invention, the migration manager 52 may only validate each document in the replacement database 64 once by comparing the document to the corresponding document in the legacy database 60 at the time the document is imported into the replacement database 64.

The migration manager may also generate reports that provide an indication of the accuracy and completeness of the migration. One way accuracy may be determined is based on accounting reports. For example, an accounting report may sum the monetary values of open and used coupons for documents in the legacy database 60 and replacement database 64. The proximity of the values of these sums may then provide an indication of how accurately data has been migrated from the legacy platform 54 to the replacement platform 56.

Completeness of the migration may be determined based on the number of migrated documents verses the number of received documents. Missing documents may be classified as "normally" missing or "abnormally" missing. A normally missing document may be a document received from the legacy database 60 that was rejected by the migration manager 52 because the format or quality of the data in the document was deficient. For example, a document may be rejected if mandatory fields are missing and cleansing is not possible. An abnormally missing document in the replacement database 64 may include missing documents where one or more migrated envelopes for the missing document are present. A document may be classified as abnormally missing if the document was provided by the legacy database 60 but is missing in the replacement database 64. Abnormally missing documents may be detected by compiling a list of documents migrated from the legacy database 60 that do not have a corresponding envelope in the replacement database 64. This list may be used to ensure accurate system cutover by identifying documents unaccounted by the legacy platform 54 that are either missing or corrupted.

Validation of the replacement platform 56 during the dual operation phase 216 also sis performed based on data received from external sources, e.g., outward billing files received from an operating carrier via the replacement input data feed 72. For this type of validation, data files in the replacement output data feed 76 may be compared to data files in legacy output data feed 74 that are responsive to the same external query. The use of live data during the dual operation phase 216 may allow both the documents in the replacement database 64 and the operation of the replacement application 62 to be validated by confirming that the replacement platform 56 operates properly with migrated data and external applications.

Outward billing documents (i.e., documents transmitted to a validating carrier for flights operated by the carrier whose system is being migrated) may be validated by comparing the documents generated by the replacement platform 56 to the documents generated by the legacy platform 54. The migration manager 52 may thereby allow validation of interline billing processes using the same data as used by the legacy platform 54, e.g., the most recent envelope in the legacy database 60.

Inward billing documents (i.e., rejection memos transmitted to an operating carrier for flights sold by the carrier whose system is being migrated) may be validated by comparing the expected billed value of the flight computed by the legacy platform 54 and the replacement platform 56. Validation may be based on reports generated by each platform that contain the expected billed value, rejection amount, and reasons for the discrepancy.

System accounting processes, e.g., accounting logic and granularity, may differ on the legacy platform 54 and replacement platform 56. Validation of accounting processes by comparing documents may require a comparison framework that includes mapping between data fields in each document, mapping between current accounts and future accounts, and mapping from one to one, one to many, many to one, and many to many data fields. In some cases, data fields may be aggregated without filtering values by summing all values of the data fields, e.g., adding monetary values for multiple transactions associated with a single ticket. In other cases, data fields may be aggregated with filtering by selecting one of the legacy or replacement documents to provide the value to the aggregated document, e.g., the date field having the most recent value.

Once the replacement platform 56 has been fully validated, the migration process may proceed to cutover 218, at which point the replacement platform 56 outbound process may become the master process. If a document is present in the replacement database 64, but missing or corrupted in the legacy database 60, the carrier may undo accrual at the beginning of the first month after cutover to the replacement platform 56. If an accounting was not performed on the legacy platform 54, the migration manager 52 may retrigger an accounting of all events relating to the missing document, e.g., the sale of the ticket and any events impacting coupons in the document prior to cutover.

If a document is missing or corrupted in both the legacy database 60 and the replacement database 64, the carrier may undo any accruals for the document in question at the beginning of the first month after cutover. A resolution task in the replacement platform 56 may be kept for post cutover resolution of the issue. When the resolution task is resolved, the pre-cutover events may be replayed on the replacement platform 56 and accounted for.

In some cases, an external system may require data for validation testing. For example, carriers may require real production data provided in large volumes in order to perform validation testing of their systems. Testing may also require that documents and coupons be in a specific state, e.g. document not yet confirmed, document not yet billed, etc. To provide this data, the migration manager 52 may select envelopes and generate documents based thereon that have the required level of completeness. The migration manager 52 may thereby replicate production data, and provide this replicated data to the system being tested. To this end, the migration manager 52 may include a user interface configured to allow selection of a specific document or list of documents (e.g., all documents referenced in a given HOT or IS-IDEC file). The user interface may further allow the user to define a stage in the life cycle of the selected document that will be exported, e.g. before the document was transmitted as an interline bill.

Embodiments of the invention may allow data to be migrated from the legacy platform 54 to the replacement platform 56 while keeping native acquired data of the replacement platform 56 available. Reports may be generated and data migration can be validated. As compared to conventional methods of migrating from a legacy platform to a replacement platform, the migration manager 52 enables a phased migration spread over a period of time, or migration period. The migration manager 52 may thereby provide a seamless and continuous validation in a production environment.

A dual-run framework may enable system migration in high volume environments using actual system traffic by providing the same data traffic to the both legacy and replacement platforms 54, 56. The replacement platform 56 may perform shadow processing of the data traffic and generate the replacement output data feed 76 based on natively generated or migrated database records. The availability of live data feeds from both the legacy and replacement platforms 54, 56 may enable flexible comparisons and facilitate generation of key performance indicators.

The migration manager 52 may enable improved and secured data migration by, for example, providing an audit trail through comparison of envelopes of newly generated documents and migrated or merged documents. The migration manager 52 may also enable data cleansing of documents by merging values between envelopes, and correction of replacement platform tasks via data migration from the legacy platform 54. The migration manager 52 may also provide master data management features. These features may include a historical migration mode that migrates data from the legacy database 60 to the replacement database 64 to provide document history, and that resets replacement platform data as the last master event.

A pre-cutover data fixing or ownership feature may fix replacement platform tasks using migrated data. If the corresponding replacement database document does not include data migrated from the legacy database 60 (e.g., the document was originated by the replacement application 62), the migration manager 52 may designate the replacement platform 56 as the master. The migration manager 52 may also facilitate envelopes reporting and comparison by tagging and selecting specific envelopes for generating reports and/or re-exporting.

By enabling the legacy and replacement platforms 54, 56 to be operated in parallel and produce equivalent data that can be compared and/or merged if needed, the migration manager 52 may provide advantages that are not available for conventional methods of migrating systems. Dual-run operation may also allow the migration manager 52 to store several images of the same coupon data enabling a continuity of comparison of migrated data with legacy data in order to provide a full audit trail of legacy platform verses replacement platform data.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computerreadable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a transmission line). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow-charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow-charts, sequence diagrams, and/or block diagrams.

In certain alternative embodiments, the functions, acts, and/or operations specified in the flow-charts, sequence diagrams, and/or block diagrams may be re-ordered, processed serially, and/or processed concurrently consistent with embodiments of the invention. Moreover, any of the flow-charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

## Claims

1. A computer-implemented method for operating a legacy platform (54) and a replacement platform (56) in parallel during a dual operation phase (126) of a migration of a data processing system from the legacy platform (54) to the replacement platform (56), the method comprising:
receiving, from an external source (12, 14, 16, 18, 20) input data at the legacy platform (54) through a legacy input data feed (70), the input data relating to a first document in a legacy database (60);
updating, by the legacy platform (54), the first document in the legacy database (60) based on the input data;
receiving, from the external source (12, 14, 16, 18, 20), the same input data relating to the first document at the replacement platform (56) through a replacement input data feed (72);
generating, by the replacement platform (56), a second document in a replacement database (64) based on the input data;
capturing, by the replacement platform (56), a first image of the second document in a first envelope in the replacement database (64), the first image in the first envelope conserving the generated second document at a specific point in time, the first envelope maintaining a history of the second document by adding an image of the second document to the first envelope when the second document is modified;
migrating the first document from the legacy database (60) to the replacement database (64);
capturing, by the replacement platform (56), a second image of the first document in a second envelope in the replacement database (64), the second image in the second envelope conserving the migrated first document at a specific point in time, the second envelope representing the first document migrated from the legacy database (60);
comparing the first image in the first envelope to the second image in the second envelope; and
in response to the second image matching the first image, validating the second document in the replacement database (64).

2. The method of claim 1 further comprising:
tagging the first envelope as a native envelope; and
tagging the second envelope as a migrated envelope.

3. The method of claim 1 or 2 further comprising:
in response to the second document being validated, tagging the first envelope as a master envelope.

4. The method of any of claims 1-3 further comprising:
comparing the first image in the first envelope to the second image in the second envelope;
in response to the second image failing to match the first image, filtering the second document in the replacement database (64) to remove a difference that caused the failure;
reporting the difference; and
in response to receiving an acceptance notification, capturing a third image of the filtered second document in a third envelope, the third image in the third envelope conserving the filtered second document at a specific point in time.

5. The method of any of claims 1-4 further comprising:
cleansing the first document prior to capturing the second image.

6. The method of any of claims 1 to 5 further comprising:
merging data from the first document into the second document; and
capturing the merged second document as a fourth image in a fourth envelope, the fourth image in the fourth envelope conserving the merged second document at a specific point in time.

7. The method of claim 6 further comprising:
in response to capturing the fourth image in the fourth envelope, tagging the fourth envelope as a merged envelope.

8. The method of any of claims 1-2 further comprising:
tagging one of the first envelope or the second envelope as a master envelope.

9. A data processing system arranged for operating a legacy platform (54) and a replacement platform (56) in parallel during a dual operation phase (126) of a migration from the legacy platform (54) to the replacement platform (56), the data processing system being configured to:
receive, from an external source (12, 14, 16, 18, 20), input data at the legacy platform (54), through a legacy input data feed (70), the input data relating to a first document in a legacy database (60);
update the first document in the legacy database (60) based on the input data;
receive, from an external source (12, 14, 16, 18, 20), the same input data at the replacement platform (56) through a replacement input data feed (72);
generate a second document in a replacement database (64) based on the input data;
capture a first image of the second document in a first envelope in the replacement database (64), the first image in the first envelope conserving the generated second document at a specific point in time, the first envelope maintaining a history of the second document by adding an image of the second document to the first envelope when the second document is modified;
migrate the first document from the legacy database (60) to the replacement database (64);
capture a second image of the first document in a second envelope in the replacement database, the second image in the second envelope conserving the migrated first document at a specific point in time, the second envelope representing the first document migrated from the legacy database (60);
compare the first image in the first envelope to the second image in the second envelope; and
in response to the second image matching the first image, validate the second document in the replacement database (64).

10. The data processing system of claim 9 being further arranged to perform the method of any of claims 2 to 8.

11. A computer program for operating a legacy platform (54) and a replacement platform (56) in parallel during a dual operation phase (126) of a migration of a data processing system from the legacy platform (54) to the replacement platform (56), the computer program comprising program code that, when executed by one or more processors, causes the processors to:
receive, from an external source (12, 14, 16, 18, 20), input data at the legacy platform (54) though a legacy input data feed (70), the input data relating to a first document in a legacy database (60);
update the first document in the legacy database (60) based on the input data;
receive, from the external source (12, 14, 16, 18, 20), the same input data relating to the first document at the replacement platform (56) through a replacement input data feed (72);
generate a second document in a replacement database (64) based on the input data;
capture a first image of the second document in a first envelope in the replacement database (64), the first image in the first envelope conserving the generated second document at a specific point in time, the first envelope maintaining a history of the second document by adding an image of the second document to the first envelope when the second document is modified;
migrate the first document from the legacy database (60) to the replacement database (64);
capture a second image of the first document in a second envelope in the replacement database, the second image in the second envelope conserving the migrated first document at a specific point in time, the second envelope representing the first document migrated from the legacy database (60);
compare the first image in the first envelope to the second image in the second envelope; and
in response to the second image matching the first image, validate the second document in the replacement database (64).

12. The computer program of claim 11 wherein the program code further causes the processors, when executed, to perform the method of any of claims 2 to 8.

## Patentansprüche

1. Computerimplementiertes Verfahren zum parallelen Betreiben einer Altbestand-Plattform (54) und einer Austausch-Plattform (56) während einer dualen Betriebsphase (126) einer Migration eines Datenverarbeitungssystems von der Altbestand-Plattform (54) zu der Austausch-Plattform (56), das Verfahren umfassend:
Empfangen von Eingabedaten von einer externen Quelle (12, 14, 16, 18, 20) an der Altbestand-Plattform (54) über eine Altbestand-Eingabedateneinspeisung (70), wobei sich die Eingabedaten auf ein erstes Dokument in einer Altbestand-Datenbank (60) beziehen;
Aktualisieren des ersten Dokuments in der Altbestand-Datenbank (60) durch die Altbestand-Plattform (54) auf der Grundlage der Eingabedaten;
Empfangen derselben Eingabedaten, die sich auf das erste Dokument beziehen, von der externen Quelle (12, 14, 16, 18, 20) an der Austausch-Plattform (56) über eine Austausch-Eingabedateneinspeisung (72);
Erzeugen, durch die Austausch-Plattform (56), eines zweiten Dokuments in einer Austausch-Datenbank (64) basierend auf den Eingabedaten;
Erfassen eines ersten Bildes des zweiten Dokuments in einem ersten Umschlag in der Austausch-Datenbank (64) durch die Austausch-Plattform (56), wobei das erste Bild in dem ersten Umschlag das erzeugte zweite Dokument zu einem bestimmten Zeitpunkt konserviert und der erste Umschlag eine Historie des zweiten Dokuments aufrechterhält, indem ein Bild des zweiten Dokuments zu dem ersten Umschlag hinzugefügt wird, wenn das zweite Dokument modifiziert wird;
Migrieren des ersten Dokuments aus der Altbestand-Datenbank (60) in die Austausch-Datenbank (64);
Erfassen eines zweiten Bildes des ersten Dokuments in einem zweiten Umschlag in der Austausch-Datenbank (64) durch die Austausch-Plattform (56), wobei das zweite Bild in dem zweiten Umschlag das migrierte erste Dokument zu einem bestimmten Zeitpunkt konserviert und der zweite Umschlag das aus der Altbestand-Datenbank (60) migrierte erste Dokument darstellt;
Vergleichen des ersten Bildes in dem ersten Umschlag mit dem zweiten Bild in dem zweiten Umschlag; und als Antwort auf die Übereinstimmung des zweiten Bildes mit dem ersten Bild, Validieren des zweiten Dokuments in der Austausch-Datenbank (64).

2. Verfahren nach Anspruch 1, das ferner umfassend: Kennzeichnen des ersten Umschlags als einen nativen Umschlag; und Kennzeichnen des zweiten Umschlags als einen migrierten Umschlag.

3. Verfahren nach Anspruch 1 oder 2 umfassend ferner:
als Antwort auf die Validierung des zweiten Dokuments, Kennzeichnung des ersten Umschlags als Master-Umschlag.

4. Verfahren nach einem der Ansprüche 1 bis 3 umfassend ferner:
Vergleichen des ersten Bildes in dem ersten Umschlag mit dem zweiten Bild in dem zweiten Umschlag;
als Antwort darauf, dass das zweite Bild nicht mit dem ersten Bild übereinstimmt, Filtern des zweiten Dokuments in der Austausch-Datenbank (64), um einen Unterschied zu entfernen, der den Fehler verursacht hat;
Melden des Unterschieds; und
als Antwort auf den Empfang einer Annahmemitteilung, Erfassen eines dritten Bildes des gefilterten zweiten Dokuments in einem dritten Umschlag, wobei das dritte Bild in dem dritten Umschlag das gefilterte zweite Dokument zu einem bestimmten Zeitpunkt konserviert.

5. Verfahren nach einem der Ansprüche 1 bis 4 umfassend ferner:
Bereinigen des ersten Dokuments vor dem Erfassen des zweiten Bildes.

6. Verfahren nach einem der Ansprüche 1 bis 5 umfassend ferner:
Zusammenführen von Daten aus dem ersten Dokument in das zweite Dokument; und
Erfassen des zusammengeführten zweiten Dokuments als ein viertes Bild in einem vierten Umschlag, wobei das vierte Bild in dem vierten Umschlag das zusammengeführte zweite Dokument zu einem bestimmten Zeitpunkt konserviert.

7. Verfahren nach Anspruch 6 umfassend ferner:
als Antwort auf das Erfassen des vierten Bildes in dem vierten Umschlag, Kennzeichnen des vierten Umschlags als einen zusammengeführten Umschlag.

8. Verfahren nach einem der Ansprüche 1 bis 3 umfassend ferner:
Kennzeichnung des ersten Umschlags oder des zweiten Umschlags als Master-Umschlag.

9. Datenverarbeitungssystem zum parallelen Betreiben einer Altbestand-Plattform (54) und einer Austausch-Plattform (56) während einer dualen Betriebsphase (126) einer Migration von der Altbestand-Plattform (54) zu der Austausch-Plattform (56), wobei das Datenverarbeitungssystem eingerichtet ist, zum:
Empfangen von Eingabedaten von einer externen Quelle (12, 14, 16, 18, 20) an der Altbestand-Plattform (54) über eine Altbestand-Eingabedateneinspeisung (70), wobei sich die Eingabedaten auf ein erstes Dokument in einer Altbestand-Datenbank (60) beziehen;
Aktualisieren des ersten Dokuments in der Altbestand-Datenbank (60) auf der Grundlage der Eingabedaten;
Empfangen derselben Eingabedaten von einer externen Quelle (12, 14, 16, 18, 20) an der Austausch-Plattform (56) über eine Austausch-Eingabedateneinspeisung (72);
Erzeugen eines zweiten Dokuments in einer Austausch-Datenbank (64) auf der Grundlage der Eingabedaten;
Erfassen eines ersten Bildes des zweiten Dokuments in einem ersten Umschlag in der Austausch-Datenbank (64), wobei das erste Bild in dem ersten Umschlag das erzeugte zweite Dokument zu einem bestimmten Zeitpunkt konserviert, wobei der erste Umschlag das zweite Dokument zu einem bestimmten Zeitpunkt konserviert und der erste Umschlag eine Historie des zweiten Dokuments aufrechterhält, indem ein Bild des zweiten Dokuments zu dem ersten Umschlag hinzugefügt wird, wenn das zweite Dokument modifiziert wird;
Migrieren des ersten Dokuments aus der Altbestand-Datenbank (60) in die Austausch-Datenbank (64);
Erfassen eines zweiten Bildes des ersten Dokuments in einem zweiten Umschlag in der Austausch-Datenbank, wobei das zweite Bild in dem zweiten Umschlag das migrierte erste Dokument zu einem bestimmten Zeitpunkt konserviert und der zweite Umschlag das aus der Altbestand-Datenbank (60) migrierte erste Dokument repräsentiert;
Vergleichen des ersten Bildes in dem ersten Umschlag mit dem zweiten Bild in dem zweiten Umschlag; und
als Antwort darauf, dass das zweite Bild mit dem ersten Bild übereinstimmt, Validierung des zweiten Dokuments in der Austausch-Datenbank (64).

10. Datenverarbeitungssystem nach Anspruch 9 ferner eingerichtet, das Verfahren nach einen der Ansprüche 2 bis 8 auszuführen.

11. Computerprogramm zum parallelen Betreiben einer Altbestand-Plattform (54) und einer Austausch-Plattform (56) während einer dualen Betriebsphase (126) einer Migration eines Datenverarbeitungssystems von der Altbestand-Plattform (54) zu der Austausch-Plattform (56), wobei das Computerprogramm Programmcode umfasst, der, wenn er von einem oder mehreren Prozessoren ausgeführt wird, die Prozessoren veranlasst:
Empfangen von Eingabedaten von einer externen Quelle (12, 14, 16, 18, 20) an der Altbestand-Plattform (54) über eine Altbestand-Eingabedateneinspeisung (70), wobei sich die Eingabedaten auf ein erstes Dokument in einer Altbestand-Datenbank (60) beziehen;
Aktualisieren des ersten Dokuments in der Altbestand-Datenbank (60) auf der Grundlage der Eingabedaten;
Empfangen derselben Eingabedaten, die sich auf das erste Dokument beziehen, von der externen Quelle (12, 14, 16, 18, 20) an der Austausch-Plattform (56) über eine Austausch-Eingabedateneinspeisung (72);
Erzeugen eines zweiten Dokuments in einer Austausch-Datenbank (64) auf der Grundlage der Eingabedaten;
Erfassen eines ersten Bildes des zweiten Dokuments in einem ersten Umschlag in der Austausch-Datenbank (64), wobei das erste Bild in dem ersten Umschlag das erzeugte zweite Dokument zu einem bestimmten Zeitpunkt konserviert, wobei der erste Umschlag eine Historie des zweiten Dokuments aufrechterhält, indem ein Bild des zweiten Dokuments zu dem ersten Umschlag hinzugefügt wird, wenn das zweite Dokument verändert wird;
Migrieren des ersten Dokuments aus der Altbestand-Datenbank (60) in die Austausch-Datenbank (64);
Erfassen eines zweiten Bildes des ersten Dokuments in einem zweiten Umschlag in der Austausch-Datenbank, wobei das zweite Bild in dem zweiten Umschlag das migrierte erste Dokument zu einem bestimmten Zeitpunkt konserviert und der zweite Umschlag das aus der Altbestand-Datenbank (60) migrierte erste Dokument repräsentiert;
Vergleichen des ersten Bildes in dem ersten Umschlag mit dem zweiten Bild in dem zweiten Umschlag; und
als Antwort auf die Übereinstimmung des zweiten Bildes mit dem ersten Bild, Validierung des zweiten Dokuments in der Austausch-Datenbank (64).

12. Computerprogramm nach Anspruch 11, wobei der Programmcode ferner bewirkt, die Prozessoren zu veranlassen, das Verfahren nach einem der Ansprüche 2 bis 8 auszuführen.

## Revendications

1. Méthode mise en œuvre par ordinateur pour faire fonctionner une plateforme existante (54) et une plateforme de remplacement (56) en parallèle durant une phase de fonctionnement double (126) d'une migration d'un système de traitement de données de la plateforme existante (54) à la plateforme de remplacement (56), la méthode comprenant :
la réception, à partir d'une source externe (12, 14, 16, 18, 20) de données d'entrée au niveau de la plateforme existante (54) par le biais d'une origine de données d'entrée existante (70), les données d'entrée se rapportant à un premier document dans une base de données existante (60) ;
la mise à jour, par la plateforme existante (54), du premier document dans la base de données existante (60) sur la base des données d'entrée ;
la réception, à partir de la source externe (12, 14, 16, 18, 20), des mêmes données d'entrée se rapportant au premier document au niveau de la plateforme de remplacement (56) par le biais d'une origine de données d'entrée de remplacement (72) ;
la génération, par la plateforme de remplacement (56), d'un deuxième document dans une base de données de remplacement (64) sur la base des données d'entrée ;
la capture, par la plateforme de remplacement (56), d'une première image du deuxième document dans une première enveloppe dans la base de données de remplacement (64), la première image dans la première enveloppe conservant le deuxième document généré à un point spécifique dans le temps, la première enveloppe maintenant un historique du deuxième document en ajoutant une image du deuxième document à la première enveloppe lorsque le deuxième document est modifié ;
la migration du premier document de la base de données existante (60) à la base de données de remplacement (64) ;
la capture, par la plateforme de remplacement (56), d'une deuxième image du premier document dans une deuxième enveloppe dans la base de données de remplacement (64), la deuxième image dans la deuxième enveloppe conservant le premier document migré à un point spécifique dans le temps, la deuxième enveloppe représentant le premier document migré à partir de la base de données existante (60) ;
la comparaison de la première image dans la première enveloppe à la deuxième image dans la deuxième enveloppe ; et
en réponse à la deuxième image correspondant à la première image, la validation du deuxième document dans la base de données de remplacement (64).

2. Méthode selon la revendication 1 comprenant en outre :
le marquage de la première enveloppe comme une enveloppe native ; et
le marquage de la deuxième enveloppe comme une enveloppe migrée.

3. Méthode selon la revendication 1 ou 2 comprenant en outre :
en réponse au deuxième document qui est validé, le marquage de la première enveloppe comme une enveloppe maîtresse.

4. Méthode selon l'une quelconque des revendications 1 à 3 comprenant en outre :
la comparaison de la première image dans la première enveloppe à la deuxième image dans la deuxième enveloppe ;
en réponse à la deuxième image échouant à correspondre à la première image, le filtrage du deuxième document dans la base de données de remplacement (64) pour supprimer une différence qui a causé l'échec ;
le rapport de la différence ; et
en réponse à la réception d'une notification d'acceptation, la capture d'une troisième image du deuxième document filtré dans une troisième enveloppe, la troisième image dans la troisième enveloppe conservant le deuxième document filtré à un point spécifique dans le temps.

5. Méthode selon l'une quelconque des revendications 1 à 4 comprenant en outre :
le nettoyage du premier document avant la capture de la deuxième image.

6. Méthode selon l'une quelconque des revendications 1 à 5 comprenant en outre :
la fusion de données provenant du premier document dans le deuxième document ; et
la capture du deuxième document fusionné comme une quatrième image dans une quatrième enveloppe, la quatrième image dans la quatrième enveloppe conservant le deuxième document fusionné à un point spécifique dans le temps.

7. Méthode selon la revendication 6 comprenant en outre :
en réponse à la capture de la quatrième image dans la quatrième enveloppe, le marquage de la quatrième enveloppe comme une enveloppe fusionnée.

8. Méthode selon l'une quelconque des revendications 1 et 2 comprenant en outre :
le marquage de l'une parmi la première enveloppe ou la deuxième enveloppe comme une enveloppe maîtresse.

9. Système de traitement de données agencé pour faire fonctionner une plateforme existante (54) et une plateforme de remplacement (56) en parallèle durant une phase de fonctionnement double (126) d'une migration de la plateforme existante (54) à la plateforme de remplacement (56), le système de traitement de données étant configuré pour :
recevoir, à partir d'une source externe (12, 14, 16, 18, 20), des données d'entrée au niveau de la plateforme existante (54), par le biais d'une origine de données d'entrée existante (70), les données d'entrée se rapportant à un premier document dans une base de données existante (60) ;
mettre à jour le premier document dans la base de données existante (60) sur la base des données d'entrée ;
recevoir, à partir d'une source externe (12, 14, 16, 18, 20), les mêmes données d'entrée au niveau de la plateforme de remplacement (56) par le biais d'une origine de données d'entrée de remplacement (72) ;
générer un deuxième document dans une base de données de remplacement (64) sur la base des données d'entrée ;
capturer une première image du deuxième document dans une première enveloppe dans la base de données de remplacement (64), la première image dans la première enveloppe conservant le deuxième document généré à un point spécifique dans le temps, la première enveloppe maintenant un historique du deuxième document en ajoutant une image du deuxième document à la première enveloppe lorsque le deuxième document est modifié ;
migrer le premier document de la base de données existante (60) à la base de données de remplacement (64) ;
capturer une deuxième image du premier document dans une deuxième enveloppe dans la base de données de remplacement, la deuxième image dans la deuxième enveloppe conservant le premier document migré à un point spécifique dans le temps, la deuxième enveloppe représentant le premier document migré à partir de la base de données existante (60) ;
comparer la première image dans la première enveloppe à la deuxième image dans la deuxième enveloppe ; et
en réponse à la deuxième image correspondant à la première image, valider le deuxième document dans la base de données de remplacement (64).

10. Système de traitement de données selon la revendication 9 qui est en outre agencé pour réaliser la méthode selon l'une quelconque des revendications 2 à 8.

11. Programme d'ordinateur pour faire fonctionner une plateforme existante (54) et une plateforme de remplacement (56) en parallèle durant une phase de fonctionnement double (126) d'une migration d'un système de traitement de données de la plateforme existante (54) à la plateforme de remplacement (56), le programme d'ordinateur comprenant un code de programme qui, lorsqu'il est exécuté par un ou plusieurs processeurs, amène les processeurs à :
recevoir, à partir d'une source externe (12, 14, 16, 18, 20), des données d'entrée au niveau de la plateforme existante (54) par le biais d'une origine de données d'entrée existante (70), les données d'entrée se rapportant à un premier document dans une base de données existante (60) ;
mettre à jour le premier document dans la base de données existante (60) sur la base des données d'entrée ;
recevoir, à partir de la source externe (12, 14, 16, 18, 20), les mêmes données d'entrée se rapportant au premier document au niveau de la plateforme de remplacement (56) par le biais d'une origine de données d'entrée de remplacement (72) ;
générer un deuxième document dans une base de données de remplacement (64) sur la base des données d'entrée ;
capturer une première image du deuxième document dans une première enveloppe dans la base de données de remplacement (64), la première image dans la première enveloppe conservant le deuxième document généré à un point spécifique dans le temps, la première enveloppe maintenant un historique du deuxième document en ajoutant une image du deuxième document à la première enveloppe lorsque le deuxième document est modifié ;
migrer le premier document de la base de données existante (60) à la base de données de remplacement (64) ;
capturer une deuxième image du premier document dans une deuxième enveloppe dans la base de données de remplacement, la deuxième image dans la deuxième enveloppe conservant le premier document migré à un point spécifique dans le temps, la deuxième enveloppe représentant le premier document migré à partir de la base de données existante (60) ;
comparer la première image dans la première enveloppe à la deuxième image dans la deuxième enveloppe ; et
en réponse à la deuxième image correspondant à la première image, valider le deuxième document dans la base de données de remplacement (64).

12. Programme d'ordinateur selon la revendication 11 dans lequel le code de programme amène en outre les processeurs, lorsqu'il est exécuté, à réaliser la méthode selon l'une quelconque des revendications 2 à 8.
